# EUROPÄISCHE PATENTANMELDUNG

(11) **EP 0 762 084 A2**
(43) Veröffentlichungstag der Anmeldung: **12.03.1997**
(21) Anmeldenummer: 96110948.5
(22) Anmeldetag: 06.07.1996
(51) Int. Cl.: G01F 1/58

(54) **Magnetisch-induktiver Durchflussmesser**

(30) Priorität: 12.09.1995 CH 2575/95
(71) Anmelder: Georg Fischer Rohrleitungssysteme AG, CH-8201 Schaffhausen (CH)
(72) Erfinder: Schalk, Adelbert, 79793 Wutöschingen-Horheim (DE)
(74) Vertreter: Szilagyi, Marianne

(57) **Zusammenfassung**

Ein magnetisch-induktiver Durchflussmesser zur Messung der Strömungsgeschwindigkeit einer Flüssigkeit weist einen Strömungskörper (10) aus Kunststoff mit einem einen Strömungskanal (18) begrenzenden rohrförmigen Teil (12) auf. Elektroden (22) durchsetzen den rohrförmigen Teil (12) und stehen einander im Strömungskanal (18) in Abstand gegenüber. Die Elektroden (22) bestehen aus einer aus einem Grundwerkstoff und einem in diesem fein verteilten, elektrisch leitfähigen Zusatzstoff zusammengesetzten, elektrisch leitfähigen Masse. Der Grundwerkstoff ist mit dem Kunststoff des Strömungskörpers (10) identisch oder verwandt und die Elektroden (22) sind mit dem rohrförmigen Teil (12) des Strömungskörpers (10) unter Bildung einer homogenen Materialverbindung zusammengefügt.

## Beschreibung

Die Erfindung betrifft einen magnetisch-induktiven Durchflussmesser zur Messung der Strömungsgeschwindigkeit einer Flüssigkeit, mit einem einen Strömungskanal begrenzenden rohrförmigen Teil eines Strömungskörpers aus Kunststoff sowie den rohrförmigen Teil durchsetzenden und im Strömungskanal einander in Abstand gegenüberstehenden Elektroden. Im Rahmen der Erfindung liegt auch ein zur Herstellung eines magnetisch-induktiven Durchflussmessers geeignetes Verfahren.

Bei magnetisch-induktiven Durchflussmessern erfordert das Messprinzip eine Kontaktierung des flüssigen Mediums an mindestens zwei Stellen. Bei bekannten Durchflussmessern werden im Strömungskörper Metallstifte oder -kappen als Elektroden verwendet, welche durch die Rohrleitungswand hindurchgeführt und mit elektrischen Leitungen verbunden sind. Hierbei erfolgt das Einsetzen der Elektroden in den Strömungskörper entweder bereits bei der Herstellung des Strömungskörpers im Spritzgussverfahren, wobei die Metallstifte in die Form eingesetzt und umspritzt werden, oder die Metallstifte werden nachträglich in den Strömungskörper eingepresst.

Ein wesentlicher Nachteil der vorbekannten Elektrodenkontaktierungen mit Metallkörpern liegt darin, dass eine zuverlässige Dichtheit zwischen den metallischen Elektroden und dem sie umgebenden Kunststoff des Strömungskörpers über einen längeren Zeitraum nicht gewährleistet ist. Die früher oder später auftretenden Undichtheiten erfordern unverhältnismässig teure Abdichtungsmassnahmen.

Angesichts dieser Gegebenheiten hat sich der Erfinder die Aufgabe gestellt, einen magnetisch-induktiven Durchflussmesser der eingangs genannten Art zu schaffen, der eine kostengünstige Kontaktierung des flüssigen Mediums bei Gewährleistung der Dichtheit ermöglicht.

Zur erfindungsgemässen Lösung der Aufgabe führt, dass die Elektroden aus einer aus einem Grundwerkstoff und einem in diesem fein verteilten, elektrisch leitfähigen Zusatzstoff zusammengesetzten, elektrisch leitfähigen Masse bestehen, wobei der Grundwerkstoff mit dem Kunststoff des Strömungskörpers identisch oder verwandt ist und die Elektroden mit dem rohrförmigen Teil des Strömungskörpers unter Bildung einer homogenen Materialverbindung zusammengefügt sind.

Der aus einem Grundwerkstoff als Matrix mit einem darin fein verteilten Zusatzstoff zusammengesetzte und in der vorliegenden Erfindung zur Herstellung der Elektroden verwendete Werkstoff wird in der Fachsprache auch als Compound bezeichnet.

Die homogene Materialverbindung zwischen den Elektroden und dem Strömungskörper, die sich aus der Wahl identischer oder verwandter Kunststoffe ergibt, führt zur gewünschten Dichtheit der erfindungsgemässen Elektrodenkontaktierung. Der Durchflussmesser ist für alle flüssigen Medien geeignet, gegen die der verwendete Kunststoff beständig ist. Da keine Torräume oder Hinterschneidungen auftreten, kann ein magnetisch induktiver Durchflussmesser neu auch für hochreine Medien eingesetzt werden.

Die homogene Materialverbindung zwischen den Elektroden und dem rohrförmigen Teil des Strömungskörpers ist bevorzugt als Schmelzzone ausgebildet.

Zweckmässigerweise weisen die Elektroden eine mit der Innenwand des rohrförmigen Teils des Strömungskörpers im wesentlichen fluchtende freie Elektrodenfläche auf.

Als elektrisch leitfähige Zusatzstoffe, die dem Grundwerkstoff zur Bereitstellung der elektrisch leitenden Masse für die Elektroden beigemischt werden, eignen sich insbesondere Russ, Kohlefasern, Metallpulver sowie Metallfasern.

Zur Herstellung einer elektrischen Anschlussverbindung ausserhalb des Strömungskörpers kann beispielsweise ein metallischer Kontaktstift in die Elektroden eingesetzt werden.

Bei einem bevorzugten Verfahren eines magnetisch-induktiven Durchflussmessers werden die Elektroden aus der elektrisch leitfähigen Masse im Spritzgussverfahren gefertigt und über eine Schmelzzone mit dem Strömungskörper verbunden. Hierbei können die Elektroden auf einer ersten Spritzgussmaschine hergestellt und nachfolgend bei der Herstellung des Strömungskörpers auf einer zweiten Spritzgussmaschine vom Strömungskörper umspritzt werden. Bei einer Verfahrensvariante wird auf einer Spritzgussmaschine in einem ersten Spritzvorgang der Strömungskörper mit Aussparungen hergestellt und nachfolgend werden in einem zweiten Spritzvorgang die Elektroden in die Aussparungen gespritzt. Elektroden und Strömungskörper können aber auch getrennt gespritzt und nachfolgend mittels Schweissverfahren miteinander verbunden werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen Längsschnitt durch einen Strömungskörper eines magnetisch-induktiven Durchflussmessers;
- Fig. 2: ein vergrössertes Detail von Fig. 1.

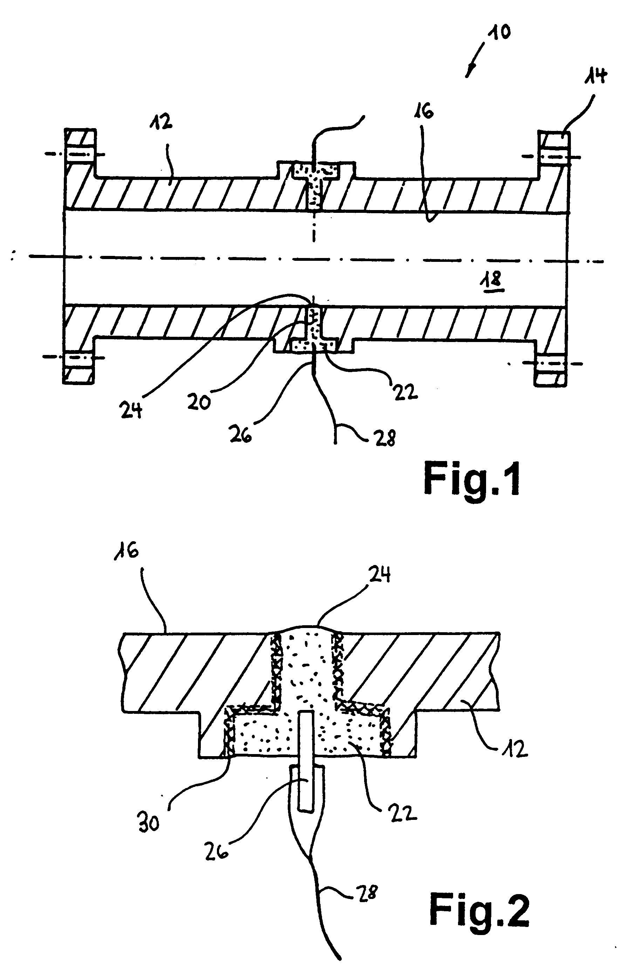

Ein in Fig. 1 dargestellter Strömungskörper 10 weist einen rohrförmigen Teil 12 mit stirnseitigen Flanschen 14 für den Einbau in ein Rohrleitungssystem eines aus Gründen der besseren Uebersicht in der Zeichnung nicht näher dargestellten magnetisch-induktiven Durchflussmessers auf.

Der rohrförmige Teil 12 des Strömungskörpers 10 ist an zwei einander diametral gegenüberliegenden Stellen unter Bildung von Aussparungen 20 durchbrochen. Die Aussparungen 20 sind mit einer aus einer elektrisch leitfähigen Masse 22 bestehenden Elektrode 22 gefüllt. Die Elektroden 22 bilden an der einen Strömungskanal 18 begrenzenden Innenwand 16 des rohrförmigen Teils 12 einander gegenüberstehende Elektrodenflächen 24. Der Anschluss der Elektroden 22 an ein ausserhalb des Strömungskörpers 10 geführtes elektrisches Kabel 28 erfolgt über einen in die Elektroden 22 eingesetzten metallischen Kontaktstift 26.

Wie insbesondere aus Fig. 2 hervorgeht, wird der Uebergang zwischen der Elektrode 22 und dem angrenzenden rohrförmigen Teil 12 bzw. dem Rand der Aussparung 20 durch eine Schmelzzone 30 gebildet. Diese Zone einer homogenen Materialverbindung entsteht durch lokales Aufschmelzen der Oberflächen beim Zusammenfügen der Elektrode 22 mit dem rohrförmigen Teil 12 des Messrohres 10.

Die elektrisch leitfähige Masse der Elektrode 22 besteht aus einem Grundwerkstoff, der mit dem zur Herstellung des

Strömungskörpers 10 verwendeten Kunststoff identisch oder zumindest verwandt ist, sowie aus einem im Grundwerkstoff in fein verteilter Form vorliegenden, elektrisch leitfähigen Zusatzstoff. Der Zusatzstoff richtet sich nach der geforderten Beständigkeit des Geräts gegenüber den flüssigen Medien und kann beispielsweise aus Russ, Kohlefasern, Metallfasern oder aus einem Metallpulver bestehen. Geeignete Grundwerkstoffe sind beispielsweise PVDF, PFA sowie weitere, als Rohrleitungswerkstoffe einsetzbare Kunststoffe.

Die Zone homogener Materialverbindung, d.h. der Schmelzzone 30 zwischen Elektrode 22 und dem rohrförmigen Teil 12 des Strömungskörpers 10, kann auf verschiedene Arten erzeugt werden. Nachfolgend sind drei mögliche Verfahrensvarianten beispielhaft beschrieben.
1. Verfahren: Auf einer ersten Spritzgussmaschine werden zunächst Elektroden 22 aus der elektrisch leitfähigen Masse gespritzt. Diese werden dann in eine zweite Spritzgussmaschine eingelegt, auf der der Strömungskörper 10 gespritzt wird. Hierbei erwärmt sich die äussere Elektrodenhaut bis zur Schmelztemperatur und es entsteht die gewünschte homogene Materialverbindung zwischen Elektrode und Strömungsköper.
2. Verfahren: Auf einer Spritzgussmaschine wird in einem ersten Spritzvorgang der Strömungskörper gespritzt. Anstelle der Elektroden 22 sind Aussparungen 20 vorgesehen. Im noch warmen Zustand kommt der Strömungskörper in ein anderes Formnest derselben Spritzgussmaschine. In einem zweiten Spritzvorgang werden sodann die Elektroden 22 aus der elektrisch leitenden Masse gespritzt. Hierbei erwärmt sich die äussere Spritzhaut des Strömungskörpers bis zur Schmelztemperatur, wodurch die homogene Materialverbindung zwischen Elektrode und Strömungskörper entsteht.
3. Verfahren: Elektroden 22 und Strömungskörper 10 werden getrennt gespritzt und mittels eines Schweissverfahrens miteinander verbunden.

## Patentansprüche

1. Magnetisch-induktiver Durchflussmesser zur Messung der Strömungsgeschwindigkeit einer Flüssigkeit, mit einem einen Strömungskanal (18) begrenzenden rohrförmigen Teil (12) eines Strömungskörpers (10) aus Kunststoff sowie den rohrförmigen Teil (12) durchsetzenden und im Strömungskanal (18) einander in Abstand gegenüberstehenden Elektroden (22),dadurch gekennzeichnet,dass die Elektroden (22) aus einer aus einem Grundwerkstoff und einem in diesem fein verteilten, elekt-risch leitfähigen Zusatzstoff zusammengesetzten, elektrisch leitfähigen Masse bestehen, wobei der Grundwerkstoff mit dem Kunststoff des Strömungskörpers (10) identisch oder verwandt ist und die Elektroden (22) mit dem rohrförmigen Teil (12) des Strömungskörpers (10) unter Bildung einer homogenen Materialverbindung zusammengefügt sind.

2. Durchflussmesser nach Anspruch 1, dadurch gekennzeichnet, dass die homogene Materialverbindung zwischen den Elektroden (22) und dem rohrförmigen Teil (12) des Strömungskörpers (10) als Schmelzzone (30) ausgebildet ist.

3. Durchflussmesser nach Anspruch 1 oder 2, dadurch gekennzeichnet, dass die Elektroden (22) eine mit der Innenwand (16) des rohrförmigen Teils (12) des Strömungskörpers (10) im wesentlichen fluchtende freie Elektrodenoberflächen (24) aufweisen.

4. Durchflussmesser nach einem der Ansprüche 1 bis 3, dadurch gekennzeichnet, dass der elektrisch leitfähige Zusatzstoff aus Russ, Kohlefasern, Metallpulver oder Metallfasern besteht.

5. Durchflussmesser nach einem der Ansprüche 1 bis 4, dadurch gekennzeichnet, dass zur Herstellung einer elektrischen Anschlussverbindung ausserhalb des Strömungskörpers (10) ein metallischer Kontaktstift (26) in die Elektroden (22) eingesetzt ist.

6. Verfahren zur Herstellung eines magnetisch-induktiven Durchflussmessers nach einem der Ansprüche 1 bis 5, dadurch gekennzeichnet, dass die Elektroden (22) aus der elektrisch leitfähigen Masse im Spritzgussverfahren gefertigt und über eine Schmelzzone (30) mit dem Strömungskörper (10) verbunden werden.

7. Verfahren nach Anspruch 6, dadurch gekennzeichnet, dass die Elektroden (22) auf einer ersten Spritzgussmaschine hergestellt und nachfolgend bei der Herstellung des Strömungskörpers (10) auf einer zweiten Spritzgussmaschine vom Strömungskörper (10) umspritzt werden.

8. Verfahren nach Anspruch 6, dadurch gekennzeichnet, dass auf einer Spritzgussmaschine in einem ersten Spritzvorgang der Strömungskörper (10) mit Aussparungen (20) hergestellt wird und nachfolgend in einem zweiten Spritzvorgang die Elektroden (22) in die Aussparungen (20) gespritzt werden.

9. Verfahren nach Anspruch 6, dadurch gekennzeichnet, dass Elektroden (22) und Strömungskörper (10) getrennt gespritzt und nachfolgend mittels eines Schweissverfahrens miteinander verbunden werden.

10. Elektrode für den Einsatz in einem magnetisch induktiven Durchflussmesser, dadurch gekennzeichnet, dass der Querschnitt der mediumsberührenden Elektrodenfläche für die Induktion der Messspannung optimal ausgelegt ist.

11. Elektrode nach Anspruch 10, dadurch gekennzeichnet, dass die Elektrode in mehrere einzelne Elektroden aufgeteilt ist, deren Querschnitte rund, elliptisch und/oder rechteckig sein können.
